# EUROPEAN PATENT APPLICATION

(11) **EP 4 156 736 A1**
(43) Date of publication of application: **29.03.2023**
(21) Application number: 21808667.6
(22) Date of filing: 21.05.2021
(51) Int. Cl.: H04W 8/08, H04W 8/20

(54) **METHOD AND DEVICE FOR SUPPORTING MOBILITY FOR COLLECTING AND ANALYZING NETWORK DATA IN WIRELESS COMMUNICATION NETWORK**

(30) Priority: 21.05.2020 KR 20200061143; 04.09.2020 KR 20200113188
(71) Applicant: Samsung Electronics Co., Ltd., Gyeonggi-do 16677 (KR)
(72) Inventor: PARK, Jungshin, Suwon-si Gyeonggi-do 16677 (KR); SHARIAT, Mehrdad, Staines Middlesex TW18 4QE (GB); JEONG, Sangsoo, Suwon-si Gyeonggi-do 16677 (KR); HAN, Yoonseon, Suwon-si Gyeonggi-do 16677 (KR)
(74) Representative: Gulde & Partner
(86) International application number: PCT/KR2021/006380
(87) International publication number: WO 2021/235902

(57) **Abstract**

Disclosed are a method and device for supporting mobility for a NWDAF in a wireless communication network. The method may comprise the steps of: deciding to transfer analytics subscriptions of a network function (NF); determining a target NWDAF to which the analytics subscriptions are to be transferred, on the basis of at least one among a terminal location, the analytics subscriptions, a consumer NF and a target area; transmitting, to the target NWDAF, a subscription transfer request message including first subscription information related to the analytics subscriptions; receiving, from the target NWDAF, a subscription transfer response message including second subscription information related to at least one analytics subscription, generated on the basis of the first subscription information; and, on the basis of the second subscription information, requesting, to a source NF, subscription cancelation of the corresponding analytics subscription among the at least one analytics subscriptions.

## Description

### [Technical Field]

The disclosure relates to a method and apparatus for supporting mobility in collecting and analyzing network data to automate management of a wireless communication network.

### [Background Art]

In order to meet the demand for wireless data traffic soaring since the 4^{th} generation (4G) communication system came to the market, there are ongoing efforts to develop enhanced 5^{th} generation (5G) communication systems or pre-5G communication systems. For the reasons, the 5G communication system or pre-5G communication system is called the beyond 4G network communication system or post LTE (long term evolution)/LTE-A (LTE advanced) system.

For higher data transmit rates, 5G communication systems are considered to be implemented on ultra-high frequency bands (mmWave), such as, e.g., 60GHz. To mitigate pathloss on the ultra-high frequency band and increase the reach of radio waves, the following techniques are taken into account for the 5G communication system, such as beamforming, massive multi-input multi-output (MIMO), full dimensional MIMO (FD-MIMO), array antenna, analog beamforming, and large scale antenna.

Also being developed are various technologies for the 5G communication system to have an enhanced network, such as evolved or advanced small cell, cloud radio access network (cloud RAN), ultra-dense network, device-to-device (D2D) communication, wireless backhaul, moving network, cooperative communication, coordinated multi-point (CoMP), and reception interference cancellation.

There are also other various schemes under development for the 5G system including, e.g., hybrid FSK and QAM modulation (FQAM) and sliding window superposition coding (SWSC), which are advanced coding modulation (ACM) schemes, and filter bank multi-carrier (FBMC), non-orthogonal multiple access (NOMA) and sparse code multiple access (SCMA), which are advanced access schemes.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged.

As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Along with the development of mobile communication systems as described above, various services may be provided, and as wireless communication networks become more complex and diversified, there is a need for a technique of automating management of a wireless communication network.

### [Detailed Description of the Invention]

### [Technical Problem]

The disclosure defines a method and apparatus for providing network data analytics and collection to automate management of a wireless communication network.

The disclosure defines a method and apparatus for supporting mobility in a network data analytics function (NWDAF) entity that provides network data analytics and collection in a wireless communication network.

The disclosure defines a method and apparatus for controlling a signal flow between an NWDAF and a network function (NF) in a mobility management procedure.

The disclosure defines a method and apparatus for controlling a signal flow between NWDAF entities to support mobility.

The disclosure defines a method and apparatus for supporting changing of an NWDAF caused by the mobility of a user equipment (LTE) or a network load.

The disclosure defines a method and apparatus for supporting handover between NWDAF entities caused by the mobility of a UE or a network load.

### [Technical Solution]

According to an embodiment of the disclosure, a method of supporting mobility by a network data analytics function (NWDAF) entity in a wireless communication network may include determining to transfer one or more analytics subscriptions for at least one network function (NF), determining a target NWDAF to which the one or more analytics subscriptions are to be transferred, based on at least one of a user equipment (UE) location, the one or more analytics subscriptions, at least one consumer NF, or a target area, transmitting a subscription transfer request message including first subscription information about the one or more analytics subscriptions to the target NWDAF, receiving a subscription transfer response message including second subscription information about at least one analytics subscription generated based on the first subscription information from the target NWDAF, and requesting unsubscription of a corresponding analytics subscription among the at least one analytics subscription from a source NF based on the second subscription information.

According to an embodiment of the disclosure, a method of supporting mobility by an NWDAF entity in a wireless communication network may include receiving a subscription transfer request message including first subscription information about one or more analytics subscriptions to at least one NF from a source NWDAF, transmitting a subscription transfer response message including second subscription information about at least one analytics subscription generated based on the first subscription information to the source NWDAF, and transmitting a subscription request message to a source NF related to a corresponding analytics subscription among the at least one analytics subscription based on the second subscription information.

According to an embodiment of the disclosure, an apparatus of an NWDAF entity in a wireless communication network may include a transceiver and a processor operatively coupled to the transceiver. The processor may be configured to determine to transfer one or more analytics subscriptions for at least one NF, determine a target NWDAF to which the one or more analytics subscriptions are to be transferred, based on at least one of a UE location, the one or more analytics subscriptions, at least one consumer NF, or a target area, transmit a subscription transfer request message including first subscription information about the one or more analytics subscriptions to the target NWDAF, receive a subscription transfer response message including second subscription information about at least one analytics subscription generated based on the first subscription information from the target NWDAF, and request unsubscription of a corresponding analytics subscription among the at least one analytics subscription from a source NF based on the second subscription information.

According to an embodiment of the disclosure, an apparatus of an NWDAF entity in a wireless communication network may include a transceiver and a processor operatively coupled to the transceiver. The processor may be configured to receive a subscription transfer request message including first subscription information about one or more analytics subscriptions to at least one NF from a source NWDAF, transmit a subscription transfer response message including second subscription information about at least one analytics subscription generated based on the first subscription information to the source NWDAF, and transmit a subscription request message to a source NF related to a corresponding analytics subscription among the at least one analytics subscription based on the second subscription information.

### [Brief Description of Drawings]

FIG. 1 is a diagram illustrating the configuration of a wireless communication network including a network data analytics function (NWDAF) according to an embodiment of the disclosure.
FIG. 2 is a diagram illustrating a signal flow for a network data collection and analytics operation according to an embodiment of the disclosure.
FIG. 3 is a diagram illustrating the overall structure of a network data collection and analytics system according to an embodiment of the disclosure.
FIG. 4 is a diagram illustrating a problem that may be caused by NWDAF relocation in a wireless communication network including a plurality of NWDAFs.
FIG. 5 is a diagram illustrating a mobility management procedure caused by NWDAF relocation in a wireless communication network according to an embodiment of the disclosure.
FIG. 6 is a diagram illustrating a mobility management procedure caused by a change of a source network function (NF) in a wireless communication network according to an embodiment of the disclosure.
FIGS. 7a and 7b are diagrams illustrating a signal flow for a mobility management procedure caused by NWDAF relocation in a wireless communication network according to an embodiment of the disclosure.
FIG. 8 is a diagram illustrating a signal flow for a mobility management procedure initiated by a target NWDAF in a wireless communication network according to an embodiment of the disclosure.
FIG. 9 is a diagram illustrating mobility management in a wireless communication network having a hierarchical NWDAF architecture according to an embodiment of the disclosure.
FIGS. 10a and 10b are diagrams illustrating a signal flow for a procedure of updating subscriptions to support mobility, in the presence of a local NWDAF associated with a consumer NF in a wireless communication network according to an embodiment of the disclosure.
FIG. 11 is a diagram illustrating the configuration of an NF entity according to an embodiment of the disclosure.
FIG. 12 is a diagram illustrating the configuration of an NWDAF entity according to an embodiment of the disclosure.

### [Mode for Carrying out the Invention]

Embodiments of the disclosure will be described below with reference to the attached drawings.

A detailed description of a generally known function or structure of the disclosure will be avoided lest it should obscure the subject matter of the disclosure. Although the terms as described later are defined in consideration of functions in the disclosure, the terms may be changed according to the intention of a user or an operator, or customs. Therefore, the definitions should be made by the meanings of each term lying within.

For the same reason, some components may be exaggerated, omitted, or schematically illustrated in the attached drawings. Further, the drawn size of each component does not exactly reflect its real size. In each drawing, the same reference numerals are assigned to the same or corresponding components.

The advantages and features of the disclosure, and a method of achieving them will become apparent from reference to embodiments described below in detail in conjunction with the attached drawings. However, the disclosure may be implemented in various manners, not limited to the embodiments set forth herein. Rather, these embodiments are provided such that the disclosure is complete and thorough and its scope is fully conveyed to those skilled in the art, and the disclosure is only defined by the appended claims.

It will be understood that each block of flowchart illustrations and combinations of the flowchart illustrations can be implemented by computer program instructions. These computer program instructions may be loaded on a processor of a general purpose computer, special purpose computer, or other programmable data processing equipment, such that the instructions, which are executed via the processor of the computer or other programmable data processing equipment, create means for implementing the functions specified in the flowchart block(s). These computer program instructions may also be stored in a computer-usable or computer-readable memory that can direct the computer or other programmable data processing equipment to function in a particular manner, such that the instructions stored in the computer-usable or computer-readable memory produce an article of manufacture including instruction means which implement the function specified in the flowchart block(s). The computer program instructions may also be loaded onto the computer or other programmable data processing equipment to cause a series of operations to be performed on the computer or other programmable data processing equipment to produce a computer implemented process such that the instructions which are executed on the computer or other programmable equipment provide operations for implementing the functions specified in the flowchart block(s).

Furthermore, the respective blocks may illustrate parts of modules, segments, or codes including one or more executable instructions for performing specific logic function(s). Moreover, it should be noted that the functions of the blocks may be performed in a different order in alternative implementations. For example, two successive blocks may be performed substantially at the same time, or may be performed in reverse order according to their functions.

The term 'unit' as used herein means, but is not limited to, a software or hardware component such as a field programmable gate array (FPGA) or application specific integrated circuit (ASIC), which performs certain tasks. A 'unit' may advantageously be configured to reside on an addressable storage medium and configured to be executed on one or more processors. Thus, a 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and 'units' may be combined into fewer components and 'units' or further separated into additional components and 'units'. In addition, the components and 'units' may be implemented such that they are executed on one or more central processing units (CPUs) in a device or a secure multimedia card. Further, a 'unit' may include one or more processors and/or devices in an embodiment.

For convenience of description, some terms and names defined in the 3^{rd} generation partnership project long term evolution (3GPP LTE)-based communication standards (e.g., 5G, NR, LTE, or a similar system standard). However, the disclosure is not limited by the terms and names, and is equally applicable to systems conforming to other standards.

Terms identifying access nodes, terms signifying network entities, terms signifying messages, terms signifying interfaces between network entities, and terms signifying various types of identification information as used in the following description are given for convenience of description. Accordingly, the disclosure is not limited to the terms described below, and the terms may be replaced by other equivalent terms in technical meanings.

While embodiments of the disclosure are described mainly in the context of a radio access network new RAN (NR) in the 5G mobile communication standard specified by a mobile communication standard standardization organization, the 3GPP, and a packet core (SG system, 5G core network, or next generation (NG) core)) as a core network, the subject matter of the disclosure is applicable to other communication systems having a similar technical background with slight modifications without departing from the scope of the disclosure, as judged by those skilled in the art.

In the 5G system, a network data collection and analysis function (NWDAF), which is a network function (NF) providing a function of analyzing and providing data collected from a 5G network, may be defined to support network automation. The NWDAF may collect/store/analyze information from the 5G network and provide the result to at least one NF, and the analytics result may be used independently in each NF.

The 5G mobile communication system supports NFs to use the result of network-related data (hereinafter, referred to as network data) collection and analytics through the NWDAF. This is done to provide network data collection and analytics required for each NF to effectively provide a function provided by the NF in a centralized manner. The NWDAF may perform network data collection and analytics using a network slice as a basic unit. However, the scope of the disclosure is not limited to the unit of a network slice, and the NWDAF may additionally use various pieces of information (e.g., including service quality) obtained from a user equipment (UE), a PDU session, an NF state, and/or an external service server.

An analytics result from the NWDAF may be delivered to each NF that has requested the analytics result and used to optimize network management functions such as quality of service (QoS) guarantee/improvement, traffic control, mobility management, and/or load balancing.

A unit node performing each function provided by the 5G network system may be defined as an NF (or referred to as an NF entity or an NF node). The NF may include at least one of, for example, an access and mobility management function (AMF) that manages access of a UE to an access network (AN) and mobility of the LTE, a session management function (SMF) that performs session-related management, a user plane function (UPF) that manages a user data plane, or a network slice selection function (NSSF) that selects an available network slice instance for the UE.

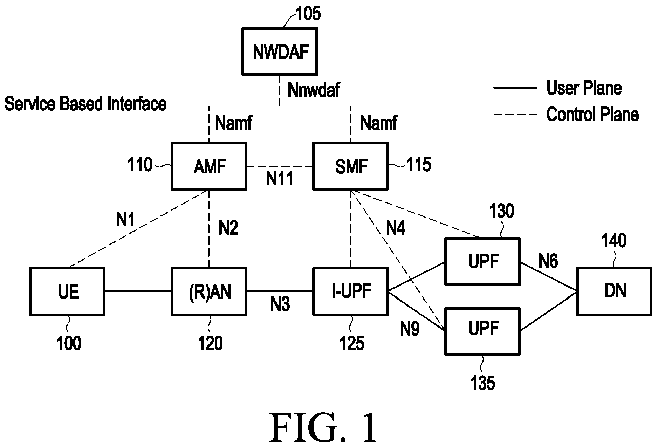

FIG. 1 is a diagram illustrating the configuration of a wireless communication network including an NWDAF according to an embodiment of the disclosure.

Referring to FIG. 1, an NWDAF 105 may collect network data in various manners from at least one source NF, for example, NFs in a 5G core network such as an AMF 110, an SMF 115, or UPFs 125, 130 and 135, an application function (AF) for efficient service provision, a network exposure function (NEF), or an operation, administration, and maintenance (OAM). The AMF 110 may be connected to a UE 100 and a radio access network (RAN) 120, and the UPFs 125, 130 and 135 may connect user traffic of the LTE 100 to at least one data network (DN) 140 through the RAN 120.

Further, the NWDAF 105 may provide analytics of network data collected from a network or the outside to at least one consumer NF. The NWDAF 105 may collect and analyze the load level of a network slice instance and provide it to an NSSF, so that a specific UE is selected to use it. A service-based interface defined in the 5G network may be used to request analytics data or transmit analytics information including an analytics result between the NFs 110 and 115 and the NWDAF 105, and for example, a hypertext transfer protocol (HTTP) and/or JavaScript object notation (JSON) document may be used for the delivery.

In an embodiment, data collected by the NWDAF 105 may include at least one of an application identifier (ID), IP filter information, or a media/application bandwidth from a point coordination function (PCF), a UE ID or location information from an AMF, a destination data network name (DDN), a UE IP, a QoS flow bit rate, a QoS flow ID (QFI), a QoS flow error rate, or a QoS flow delay from an SMF, or a traffic usage report from a UPF.

The NWDAF may additionally collect at least one of, for example, an NF resource status, an NF throughput, or service level agreement (SLA) information from an OAM, which is an entity that may affect a connection between a UE and a service server, a UE status, UE application information, or a UE usage pattern from a UE, or a service application ID, a service experience, or a traffic pattern from an AF, in addition the NFs of the core network, and use the additionally collected information for analytics.

The following <Table 1> to <Table 3> illustrate examples of network data collected by the NWDAF. A period and a time point for network data collection of the NWDAF from an entity may be different for each entity. Besides, the correlation of collected data may be identified by a correlation ID for correlating data of each collection target and a timestamp for recording a collection time.

**[Table 1]**

| **Information** | **Source** | **Description** |
|---|---|---|
| Application ID | AF | To identify the service and support analytics per type of service (the desired level of service) |
| IP filter information | AF | Identify a service flow of the LTE for the application |
| Locations of Application | AF/NEF | Locations of application represented by a list of DNAI(s). The NEF may map the AF-Service-Identifier information to a list of DNAI(s) when the DNAI(s) being used by the application are statically defined. |
| Service Experience | AF | Refers to the QoE per service flow as established in the SLA and during on boarding. It can be either e.g. MOS or video MOS as specified in ITU-T P.1203.3 or a customized MOS |
| Timestamp | AF | A time stamp associated to the Service Experience provided by the AF, mandatory if the Service Experience is provided by the ASP. |

**[Table 2]**

| **Information** | **Source** | **Description** |
|---|---|---|
| Timestamp | 5GC NF | A time stamp associated with the collected information. |

| Location | AMF | The UE location information. |
|---|---|---|
| SUPI(s) | AMF | If UE IDs are not provided as target of analytics reporting for slice service experience, AMF returns the UE IDs matching the AMF event filters. |
| DNN | SMF | DNN for the PDU Session which contains the QoS flow |
| S-NSSAI | SMF | S-NSSAI for the PDU Session which contains the QoS flow |
| Application ID | SMF | Used by NWDAF to identify the application service provider and application for the QoS flow |
| IP filter information | SMF | Provided by the SMF, which is used by NWDAF to identify the service data flow for policy control and/or differentiated charging for the QoS flow |
| QFI | SMF | QoS Flow Identifier |
| QoS flow Bit Rate | UPF | The observed bit rate for UL direction; andThe observed bit rate for DL direction |
| QoS flow Packet Delay | UPF | The observed Packet delay for UL direction; andThe observed Packet delay for the DL direction |
| Packet transmission | UPF | The observed number of packet transmission |
| Packet retransmission | UPF | The observed number of packet retransmission |

**[Table 3]**

| **Information** | **Source** | **Description** |
|---|---|---|
| Timestamp | OAM | A time stamp associated with the collected information. |
| Reference Signal Received Power | OAM | The per UE measurement of the received power level in a network cell, including SS-RSRP, CSI-RSRP as specified in clause 5.5 of TS 38.331 and E-UTRA RSRP as specified in clause 5.5.5 of TS 36.331 |
| Reference Signal Received Quality | OAM | The per UE measurement of the received quality in a network cell, including SS-RSRQ, CSI-RSRQ as specified in clause 5.5 of TS 38.331 and E-UTRA RSRQ as specified in clause 5.5.5 of TS 36.331 |
| Signal-to-noise and interference ratio | OAM | The per UE measurement of the received signal to noise and interference ratio in a network cell, including SS-SINR, CSI-SINR, E-UTRA RS-SINR, as specified in clause 5.1 of TS 38.215 |

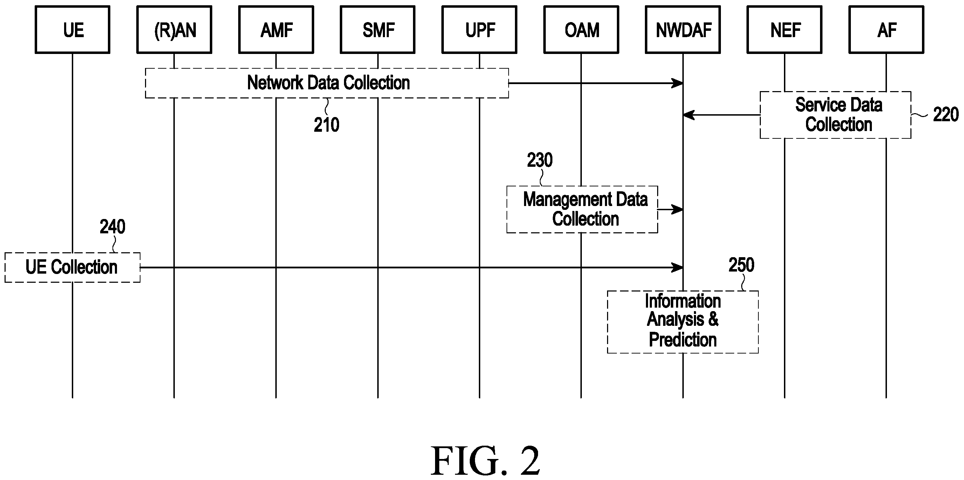

FIG. 2 is a diagram illustrating an overall structure for collecting and analyzing network data according to an embodiment of the disclosure.

Referring to FIG. 2, an NWDAF may collect network data from NFs such as a RAN, an AMF, an SMF, and a UPF in operation 210, collect service data from an NEF or an AF in operation 220, collect management data from an OAM in operation 230, and collect UE data from a UE in operation 240. Examples of the collected data are shown in <Table 1> to <Table 3>. In operation 250, the NWDAF may analyze the collected data and provide an analytics result to a corresponding NF, upon request.

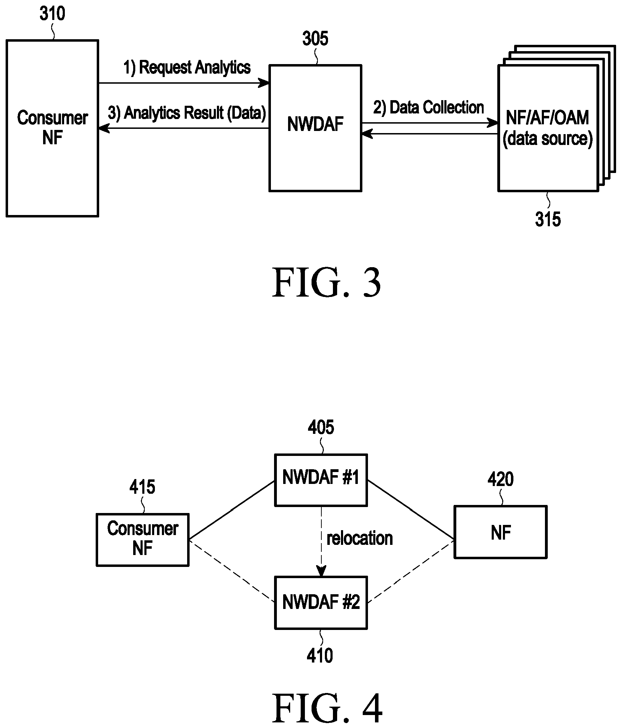

FIG. 3 is a diagram illustrating the overall structure of a network data collection and analytics system according to an embodiment of the disclosure.

Referring to FIG. 3, each network entity which may be an AMF, an SMF, an OAM, or a RAN included in a core network may operate as a consumer NF 310 requesting analytics information generated as a result of analytics in an NWDAF 305 as in operation 1). The NWDAF 305 may collect data from a source NF 315 such as an NF, an AF, or an OAM and analyze the collected data to generate the analytics information requested by the consumer NF 310 as in operation 2). As in operation 3), the NWDAF 305 may transmit the analytics information to the consumer NF 310 that has transmitted the request. The consumer NF 310 may use the analytics information received from the NWDAF 305 in the process of determining control parameters and operations for its own function.

The NWDAF 305 may collect required data from the NFs 315 in the network to provide the analytics information requested by the consumer NF 310. The data collection of the NWDAF 305 may be performed based on subscriptions of the corresponding NFs. The source NF 315 may receive a subscription request from the NWDAF 305 and provide requested network data.

In the wireless communication network, an NF that processes a signaling message for a UE may be changed to another NF according to a location or time due to movement of the UE or a change in a network load. In this process, a network entity related to the UE may be changed from consumer NF #1 to consumer NF #2, or from source NF #1 to source NF #2. Then, a subscription between the NWDAF and consumer NF #1 is no longer valid, and for network automation, changed consumer NF #2 may have to perform a subscription procedure for the NWDAF again from the beginning. In addition, since a subscription between the NWDAF and source NF #1 is also invalid, the NWDAF should unsubscribe the subscription and perform the subscription procedure with source NF #2 again. This additional procedure increases a signal message load in the network.

Similarly to the coverage of some NFs, the NWDAF may have limited coverage. For example, the coverage of the NWDAF may cover an entire public land mobile network (PLMN) corresponding to an operator network, or a plurality of NWDAFs each having its own coverage may be deployed in the operator network. In this case, techniques may be needed to seamlessly process data collection and analytics while supporting mobility between NWDAFs.

FIG. 4 is a diagram illustrating a problem that may occur due to NWDAF relocation in a wireless communication network including a plurality of NWDAFs.

Referring to FIG. 4, NWDAF #1 405 subscribes to source NF #1 420, for data collection, and consumer NF #1 415 subscribes to NWDAF #1 405, for requesting analytics information. NWDAF relocation may occur from NWDAF #1 405 to NWDAF #2 410 due to a predetermined criterion (e.g., UE mobility and/or network load balancing). Then, the subscription between NWDAF #1 405 and consumer NF #1 415 and the subscription between NWDAF #1 405 and source NF #1 420 will no longer be valid, and consumer NF #1 415 may have to perform a subscription procedure with new NWDAF #2 410 again. In addition, since the subscription between NWDAF #1 405 and source NF #1 420 is also invalid, NWDAF #2 405 should perform the subscription procedure with source NF #1 420, for data collection. This additional procedure increases the signal message load in the network.

The disclosure proposes embodiments for supporting the mobility of an NWDAF to solve the above problem.

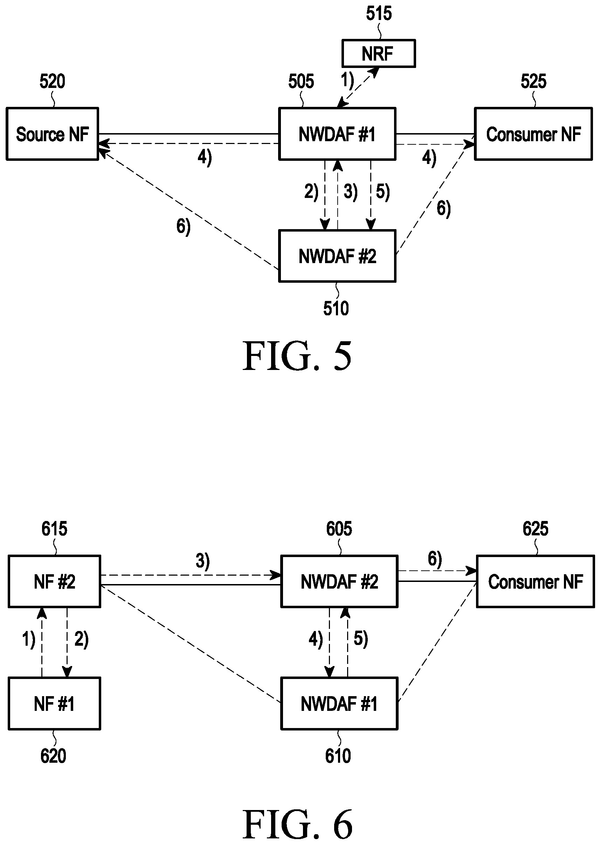

FIG. 5 illustrates a mobility management procedure caused by NWDAF relocation in a wireless communication network according to an embodiment of the disclosure. Various embodiments of the disclosure may include at least one of the following operations.

Referring to FIG. 5, NWDAF #1 505 may detect that a UE has moved into the coverage of NWDAF #2 510. In an embodiment, NWDAF #1 505 may determine that it is necessary to transfer analytics for the LTE to another NWDAF (e.g., NWDAF #2 510), for some reason, for example, for load balancing. NWDAF #1 505 may perform an NWDAF relocation procedure by querying a network repository function (NRF) 515 managing a network function profile for related information to identify handover candidates as in operation 1), and selecting a new NWDAF (e.g., NWDAF #2 510) suitable for the UE, referring to information received from the NRF 1515. NWDAF #1 505 is a source NWDAF, and NWDAF #2 510 is a target NWDAF. For example, NWDAF #1 505 may transmit at least one of a UE location, subscribed analytics information, a consumer NF list, or a target area in order to query the NRF 515. The target area means a service area including a destination to which the UE moves. The NRF 515 may respond to source NWDAF #1 505 with information about target NWDAF #2 510 based on the information.

Source NWDAF #1 505 may transmit a message requesting transfer of registered subscriptions to selected target NWDAF #2 510 as in operation 2). Target NWDAF #2 510 may select subscriptions that it wants to support from a subscription list received in the message, and transmit a response message including a list of the selected subscriptions to the source NWDAF 505 as in operation 3). The source NWDAF 505 may use the list of selected subscriptions provided by the target NWDAF 510 to update information about the selected subscriptions, and in operation 4), perform a procedure of updating subscription information about the consumer NF 525 and the source NF 520. In an embodiment, source NWDAF #1 505 may transmit the updated information about the subscriptions to the consumer NF 525 and unsubscribe the subscriptions of the source NF 520 in operation 4). In an embodiment, source NWDAF #1 505 may notify target NWDAF #2 510 that the subscriptions have been completely updated, and transmit network data collected from the source NF 520 in operation 5).

In an embodiment, target NWDAF #2 510 may perform an additional update procedure with the source NF 520 and the consumer NF 525 when needed, to complete the subscription information update procedure caused by the NWDAF relocation as in operation 6).

FIG. 6 illustrates a mobility management procedure caused by changing of a source NF in a wireless communication network according to an embodiment of the disclosure. Various embodiments of the disclosure may include at least one of the following operations.

Referring to FIG. 6, NF #1 620 belongs to the coverage of NWDAF #1 610, and NF #2 615 belongs to the coverage of NWDAF #2 605. For example, a handover procedure from NF #1 520 to NF #2 615 may be performed by movement of a LTE. Then, in operation 1), NF #1 620 may identify that it is the source NF of NWDAF #1 610, and transmit an old NWDAF ID indicating NWDAF #1 610 to which it is subscribed and information about analytics subscriptions in a handover request message to NF #2 615.

NF #2 615 transmits a handover response message corresponding to the handover request message to NF #1 620 in operation 2), and request update of the corresponding subscriptions from NWDAF #2 602 in operation 3). In an embodiment, NWDAF #2 605 may identify NWDAF #1 610 based on the information (e.g., the old NWDAF ID) obtained from NF #2 615 or information obtained from another network entity during the handover process, and request information related to subscriptions of at least one consumer NF (e.g., including a consumer NF 625) and source NF(s) (e.g., including NF #1 620) from NWDAF #1 610 as in operation 4). In operation 5), NWDAF #1 610 responds to NWDAF #2 605 with the requested information related to the subscriptions. NWDAF #2 605 completes the NWDAF change procedure by updating the subscriptions with the consumer NF (e.g., including the consumer NF 625) and the source NF(s) (e.g., NF #2 615) using the received information related to the subscriptions. In operation 6), NWDAF #2 605 may inform the consumer NF 625 of information about the updated subscriptions.

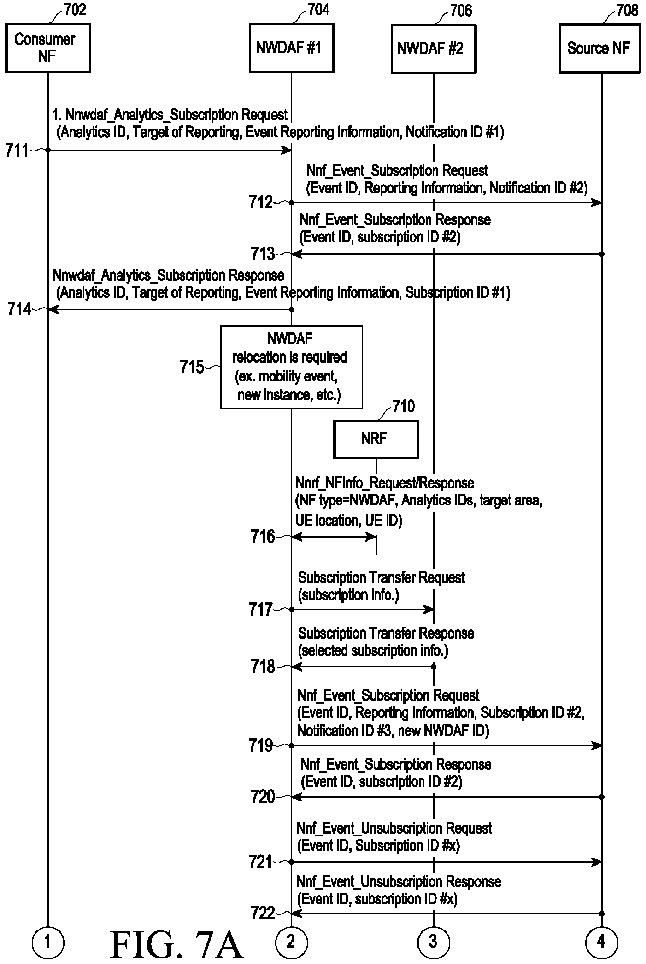

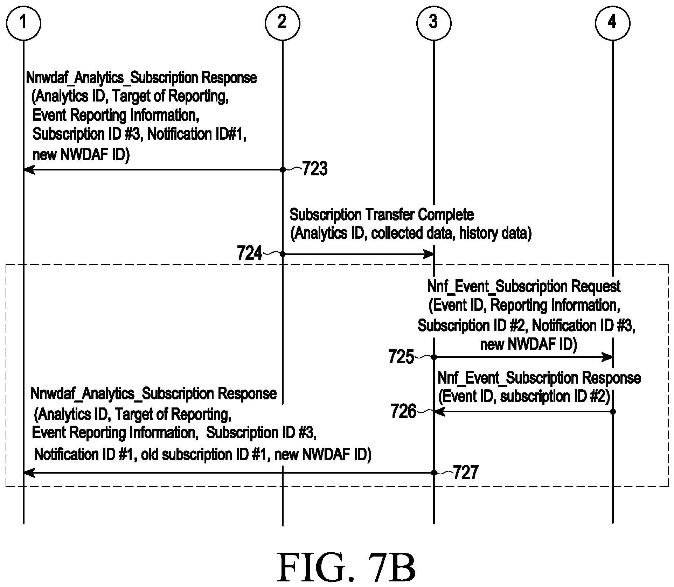

FIGS. 7a and 7b (hereinafter, referred to as FIG. 7) are diagrams illustrating a signal flow for a mobility management procedure caused by NWDAF relocation in a wireless communication network according to an embodiment of the disclosure. Various embodiments of the disclosure may include at least one of the following operations.

Referring to FIG. 7, NWDAF #1 704 may receive a subscription request message Nnwdaf_Analytics_Subscription Request requesting provision of network analytics data from a consumer NF 702 in operation 711. In an embodiment, the subscription request message may include at least one of an Analytics ID, a Target of Reporting, Event Reporting Information, and a Notification ID. The Analytics ID is a parameter indicating the type of analytics data that the consumer NF 702 wants to receive, the Target of Reporting is a parameter indicating a UE (or a UE group or all UEs) to be analyzed, and the Event Reporting Information is a parameter indicating the reporting period, precision, and filtering information of the analytics data. The Notification ID is a value set by the consumer NF 702, and is a parameter for identifying a report message of analytics data (it is set to #1 in the illustrated example).

In operation 712, NWDAF #1 704 may select at least one source NF 708 capable of providing source data required to provide analytics data from the subscription request message received from the consumer NF 702, and transmit an event subscription request message Nnf_Event Subscription Request requesting data provision to the source NF 708. In an embodiment, the event subscription request message may include at least one of an event ID indicating the type of data to be received, reporting information specifying a report period and the format of report data, or a notification ID set by NWDAF #1 704 to identify a report message carrying data to NWDAF #1 704 (it is set to #2 in the illustrated example).

In operation 713, upon receipt of the event subscription request message from NWDAF #1 704, the source NF 708 may transmit an event subscription response message Nnf_Event Subscription Response including acceptance of the subscription request of operation 712 to NWDAF #1 704. In an embodiment, the event subscription response message may include an event ID and a subscription ID set by the source NF 708 (it is set to #2 in the illustrated example).

In operation 714, NWDAF #1 704 may transmit a subscription response message Nnwdaf_Analytics_Subscription Response including acceptance of the subscription request of operation 711 to the consumer NF 702. In an embodiment, the subscription response message may include at least one of an Analytics ID, a Target of Reporting, Event Reporting Information, or a Subscription ID set by NWDAF #1 704 to identify the subscription request (it is set to #1 in illustrated example). The Subscription ID and the Notification ID may be used as identifiers for identifying subscriptions required when the subscriptions are updated according to mobility in subsequent operations.

In operation 715, NWDAF #1 704 may determine that NWDAF relocation is required according to a predetermined criterion (e.g., including at least one of UE movement and/or network load balancing). In an embodiment, the determination may be made based on the fact that the UE has moved out of the coverage of NWDAF #1 704. In an embodiment, the determination may be made based on analytics of data collected from NFs or signaling message(s) generated in a mobility management procedure of the UE. This determination process may be performed in various manners depending on implementation, and its details will be omitted.

In operation 716, NWDAF #1 704 may transmit an NF information request message Nnf_NFInfo _Request to an NRF 710 that provides profile information about each NF, to select a target NWDAF for subscription (i.e., analytics subscription) transfer. In an embodiment, the NF information request message may include at least one of an NF type indicating an NF type requested by NWDAF #1 704, analytics IDs specifying the types of analytics data to be provided by the target NWDAF, a target area specifying a desired service area, a LTE location, or a LTE ID. In an embodiment, the NF information request message may include NF Type set to a value indicating 'NWDAF' in order to request candidates among which the target NWDAF is to be selected. Upon request of NWDAF #1 704, the NRF 710 may transmit information about at least one NWDAF which is capable of providing analytics data of the specified types and which may be a candidate for transfer of subscriptions in the specified service area.

In operation 717, NWDAF #1 704 may select NWDAF #2 706 as the target NWDAF based on the received information, and transmit a Subscription Transfer Request message for transferring analytics subscriptions for network data analytics (i.e., analytics subscriptions) to NWDAF #2 706. The Subscription Transfer Request message may include subscription information about subscriptions requested to be transferred. In an embodiment, the subscription information may include parameters for subscriptions of source NWDAF #1 704 to the consumer NF 702 and information about event subscriptions of each source NF to source NWDAF #1 704 to provide analytics data.

In an embodiment, in the case of an analytics data subscription for the consumer NF 702, {Analytics ID, Target of Reporting, Event Reporting Information, Notification ID, Subscription ID, Consumer NF ID, etc.} may be included in the subscription information. In an embodiment, in the case of an event subscription for the source NF 708, {Event ID, Reporting Information, Notification ID, Subscription ID, NF ID, etc.} may be included in the subscription information. In an embodiment, the Subscription ID and the Notification ID for each subscription may be set to values set to identify the subscription in the subscription process in the subscription information.

In operation 718, target NWDAF #2 706 may select subscriptions (i.e., analytics subscriptions) to be supported by target NWDAF #2 706 based on the subscription information received in the Subscription Transfer Request message, and transmit subscription information about the selected subscriptions in a Subscription Transfer Response message to source NWDAF #1 704. In an embodiment, target NWDAF #2 706 may change at least one parameter (e.g., including a reporting period and/or reporting information) for each of the selected subscriptions, and transmit the at least one changed parameter in the subscription information delivered in the Subscription Transfer Response message to source NWDAF #1 704. In an embodiment, target NWDAF #2 706 may set a new notification ID (set to #3 in the illustrated example) for each of the selected subscriptions, and transmit the new notification ID in the subscription information included in the Subscription Transfer Response message to source NWDAF #1 704.

In operations 719 and 720, source NWDAF #1 704 may update subscription information about the subscriptions with the source NF 708 using the subscription information about the subscriptions received from target NWDAF #2 706. In an embodiment, source NWDAF #1 704 may transmit the new notification ID (=#3) and the ID of target NWDAF #2 706, NWDAF #2 received from target NWDAF #2 706 in an event subscription request message to the source NF 708. For each subscription, the value of the subscription ID received from the source NF 708 in operation 713 may still be maintained in the event subscription request message. The source NF 708 may detect a subscription to be updated based on the value of the Subscription ID received in the event subscription request message. Further, target NWDAF #2 706 may maintain the subscription using a Subscription ID of the same value and receive data from the source NF 708 based on the subscription.

In operations 721 and 722, source NWDAF #1 704 may identify subscriptions not selected by target NWDAF #2 706 using the subscription information about the selected subscriptions received in operation 718, request the source NF 708 to unsubscribe the subscriptions not selected by target NWDAF #2 706, and receive a response to the request.

In operation 723, source NWDAF #1 704 may transmit, to the consumer NF 702, a subscription response message requesting update of the selected subscriptions, received from target NWDAF #2 706. In an embodiment, the subscription response message may include at least one of a subscription ID (set to #3 in the illustrated example) set for each updated subscription by target NWDAF #2 706 or a new NWDAF ID set to the value of the identifier of target NWDAF #2 706.

In an embodiment, the value of the notification ID for each subscription received from the consumer NF 702 in operation 711 may be maintained in the subscription response message of operation 723 for update. Target NWDAF #2 706 may report analytics data to the consumer NF 702 using the same value of the notification ID.

In an embodiment, target NWDAF #2 706 may transmit at least one of subscription information received from source NWDAF #1 704, previous subscription ID #1, or the notification ID that the consumer NF 702 has set with source NWDAF #1 704 by the consumer NF 702 during the subscription procedure in a subscription response message Nnwdaf_Analytics_Subscription Response to the consumer NF 702.

In operation 724, source NWDAF #1 704 transmits a Subscription Transfer Complete message to target NWDAF #2 706, indicating that the update of the selected subscriptions is complete. In an embodiment, the Subscription Transfer Complete message may include subscription information about the subscriptions transferred from source NWDAF #1 704 to target NWDAF #2 706. In an embodiment, history data including at least one of data that source NWDAF #1 704 previously collected from the source NF 708 or analytics data that source NWDAF #1 704 reported to the consumer NF 702 for each subscription may be transmitted in the Subscription Transfer Complete message to target NWDAF #2 706. Upon receipt of the Subscription Transfer Complete message, target NWDAF #2 706 is capable of communicating with the consumer NF 702 and the source NF 708 by using the updated subscription information about the selected subscriptions.

In an embodiment, at least one of operation 725, operation 726, or operation 727 may substitute for at least one of operation 719, operation 720, or operation 723. In this embodiment, target NWDAF #2 706 may select subscriptions to be updated based on the subscription information received from source NWDAF #1 704, and perform a subscription update process for the selected subscriptions with the consumer NF 702 and the source NF 708, rather than source NWDAF #1 704 performs the subscription update process.

In operations 725 and 726, target NWDAF #2 706 may use the subscription information about the selected subscriptions to update the subscription information about the subscriptions with the source NF 708. In an embodiment, target NWDAF #2 706 may transmit a notification ID (= #3) of a new value set by target NWDAF #2 706 and the target NWDAF ID identifying target NWDAF #2 706 in an event subscription request message to the source NF 708. In an embodiment, for each subscription, the value of the subscription ID received from the source NF 708 in operation 713 may be maintained in the event subscription request message. The source NF 708 may detect a subscription to be updated based on the value of the Subscription ID received in the event subscription request message. Target NWDAF #2 706 may also maintain the subscription using the Subscription ID of the same value, and receive data from the source NF 708 based on the subscription.

In operation 727, target NWDAF #2 706 may transmit a subscription response message requesting update of the subscription information about the selected subscriptions to the consumer NF 702. In an embodiment, the subscription response message may include at least one of a Subscription ID (set to #3 in the illustrated example) set by target NWDAF #2 706 for each renewed subscription or a new NWDAF ID set to the ID of target NWDAF #2 706.

If operations 725, 726 and 727 are performed, operations 719, 720 and 723 may be omitted. In an embodiment, while not shown in this example, a procedure of unsubscribing a subscription with the consumer NF 702 may be performed for subscriptions not selected in the process of performing operation 723 or 727. In an embodiment, after operation 723 or operation 727, an unsubscription procedure similar to, for example, operations 720 and 721 may be performed.

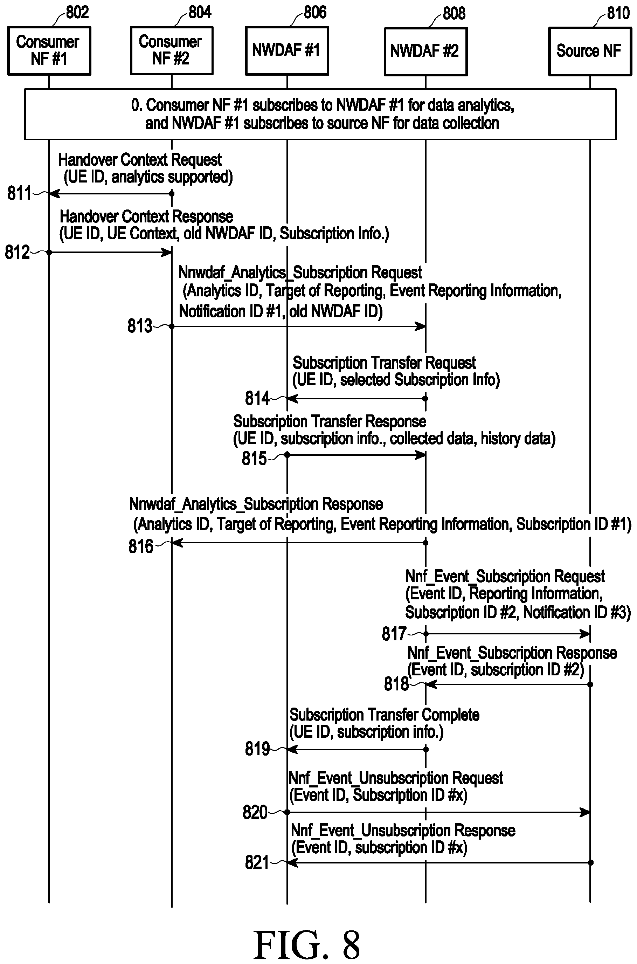

In an embodiment, when operation 727 is performed, target NWDAF #2 706 may transmit, to the consumer NF 702, at least one of the subscription information received from source NWDAF #1 704, previous subscription ID #1, or notification ID #1 provided by the consumer NF 702 in a subscription response message Nnwdaf_Analytics_Subscription Response, to enable the consumer NF 702 to identify that operation 727 is related to a subscription substituting for previous subscription ID #1 between source NWDAF #1 704 and the consumer NF 702. In an embodiment, while omitted in this example, target NWDAF #2 706 may transmit, to source NWDAF #1 704, a message (e.g., the Subscription Transfer Complete message) reporting that target NWDAF #2 706 has completed the update of the subscriptions requested by source NWDAF #1 704 with the source NF 708 and the consumer NF 702 after operation 727, depending on implementation. In an embodiment, the Subscription Transfer Completion message of operation 727 may include notification ID #1 obtained in operation 711 and old subscription ID #1 obtained in operation 714. FIG. 8 is a diagram illustrating a signal flow for a mobility management procedure initiated by a target NWDAF in a wireless communication network according to an embodiment of the disclosure. Although the illustrated procedure is similar to the case of FIG. 7 described above, the former is different from the latter in that the target NWDAF is selected by the consumer NF and performs the subscription transfer procedure. Various embodiments of the disclosure may include at least one of the following operations.

Referring to FIG. 8, in operation 0, consumer NF #1 802 subscribes to source NWDAF #1 806, for data analytics, and source NWDAF #1 806 subscribes to a source NF 810, for data collection.

Operations 811 and 812 are for a case in which subscription information is transmitted between consumer NFs 802 and 804 in a mobility management procedure, and the specific procedure may be changed depending on implementation. In operation 811, consumer NF #2 804 may recognize that an NWDAF change and/or a consumer NF change has occurred based on a predetermined criterion (e.g., LTE mobility and/or network load balancing), and transmit a Handover Context Request message requesting information for handover to consumer NF #1 802 being a handover source. In an embodiment, the Handover Context Request message may include a UE ID identifying a UE for which handover is to be performed, and analytics supported information indicating the type of analytics data that consumer NF #2 804 wants to use, together with other handover-related parameters.

In operation 812, consumer NF #1 802 may include an old NWDAF ID being the ID of NWDAF #1 806 to which consumer NF #1 802 has subscribed, and subscription information about current subscriptions, along with the UE ID and a corresponding UE context in a Handover Context Response message, referring to the analytics supported information provided by consumer NF #2 804, and transmit the Handover Context Response message to consumer NF #2 804. In an embodiment, the Handover Context Response message may include the ID of the NWDAF without the subscription information, and consumer NF #2 804 may receive the subscription information directly from the new NWDAF in subsequent operations.

In operation 813, consumer NF #2 804 may select desired subscriptions based on the received subscription information about the subscriptions, and transmit a subscription request message including subscription information about the selected subscriptions to NWDAF #2 808. In an embodiment, the subscription information may include at least one of an Analytics ID, a Target of Reporting, Event Reporting Information, or a Notification ID (set to #1 in the illustrated example) related to the subscription information. In an embodiment, the subscription request message may include the old NWDAF ID received from consumer NF #1 802, and NWDAF #2 808 may identify that the subscription request message has been transmitted for update caused by mobility, based on the old NWDAF ID.

In operation 814, NWDAF #2 808 may detect NWDAF #1 806 based on the old NWDAF ID, and transmit a Subscription Transfer Request message requesting subscription information about subscriptions configured for a LTE to NWDAF #1 806. In an embodiment, the subscription information included in the Subscription Transfer Request message may include information identifying each of the selected subscriptions described above, and NWDAF #1 806 may select each subscription related to the UE from the information. In operation 815, NWDAF #1 806 may transmit a Subscription Transfer Response message including at least one of the UE ID, the subscription information, collected data, or history data to NWDAF #2 808 in response to the Subscription Transfer Request message. NWDAF #2 808 may transmit a subscription response message for updating subscription information to consumer NF #2 804 in operation 816, and exchange a subscription request message and a subscription response message for update of the subscription information with the source NF 810 in operations 817 and 818. In an embodiment, the subscription response message transmitted from NWDAF #2 808 to consumer NF #2 804 in operation 816 may include a Subscription ID newly assigned to the updated subscription by NWDAF #2 808.

In operation 819, NWDAF #1 806 may receive a Subscription Transfer Complete message indicating that the update of the selected subscriptions is completed from NWDAF #2 808. In operations 820 and 821, NWDAF #1 806 may perform an unsubscription procedure for unselected subscriptions (e.g., including a subscription having subscription ID #x) with the source NF 810.

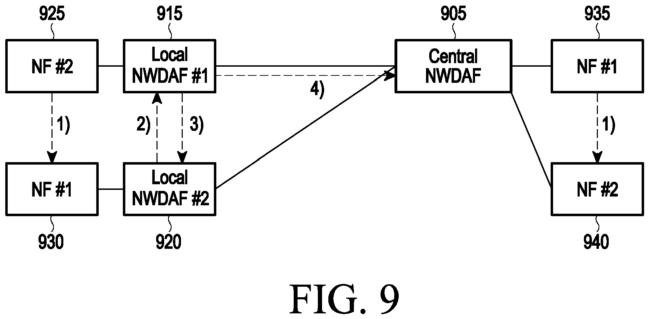

FIG. 9 is a diagram illustrating mobility management in a wireless communication network having a hierarchical NWDAF architect according to an embodiment of the disclosure.

Referring to FIG. 9, there may exist local NWDAFs #1 915 and #2 920 associated with consumer NFs #1 925 and #2 930, respectively. A central NWDAF 905 may collect network data from source NF1 935 and transmit analytics data to the consumer NFs 925 and 930 through local NWDAFs #1 915 and #2 920. In an embodiment, the central NWDAF 905 may transmit data collected from source NF1 935 to local NWDAFs #1 915 and #2 920. Local NWDAFs #1 915 and #2 920 may transmit analytics data for consumer NFs #1 925 and #2 930, generated based on the collected data to consumer NFs #1 925 and #2 930.

In the illustrated network, the NWDAFs 905, 915, and 920 may be configured in multiple stages, some analytics data may be provided by the central NWDAF 905, and subscription information for some analytics may be changed in the process of handling mobility. In the process of handling mobility, subscriptions for some analytics may be transferred from the local NWDAF 915 or 920 to the central NWDAF 905 or from the central NWDAF 905 to the local NWDAF 915 or 920. In an embodiment, the local NWDAF 915 or 920 may be implemented by being merged with the consumer NF 925 or 930. In this case, signaling between the local NWDAF 915 or 920 and the consumer NF 925 or 930 may be replaced with internal signaling.

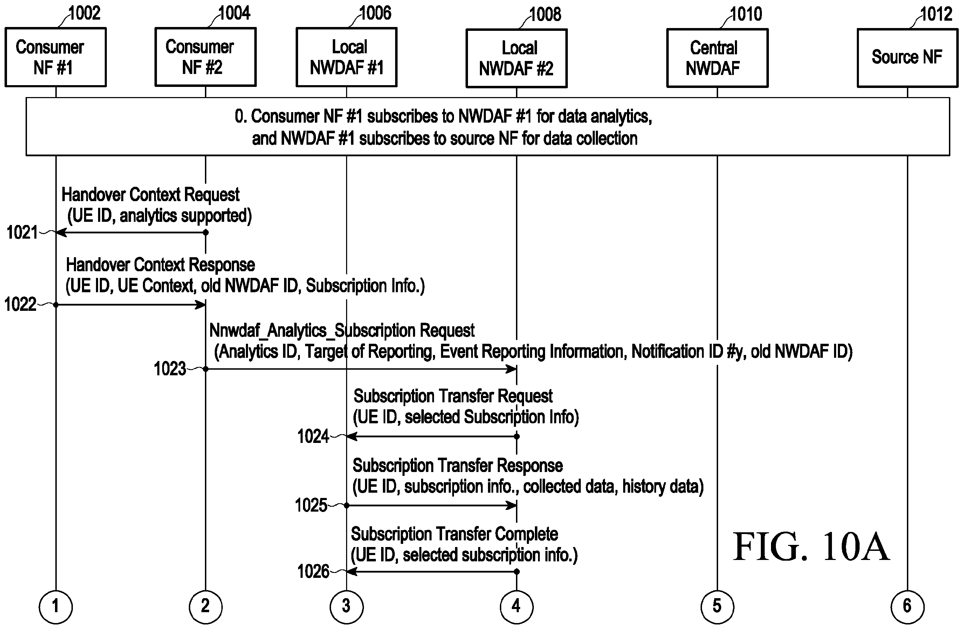

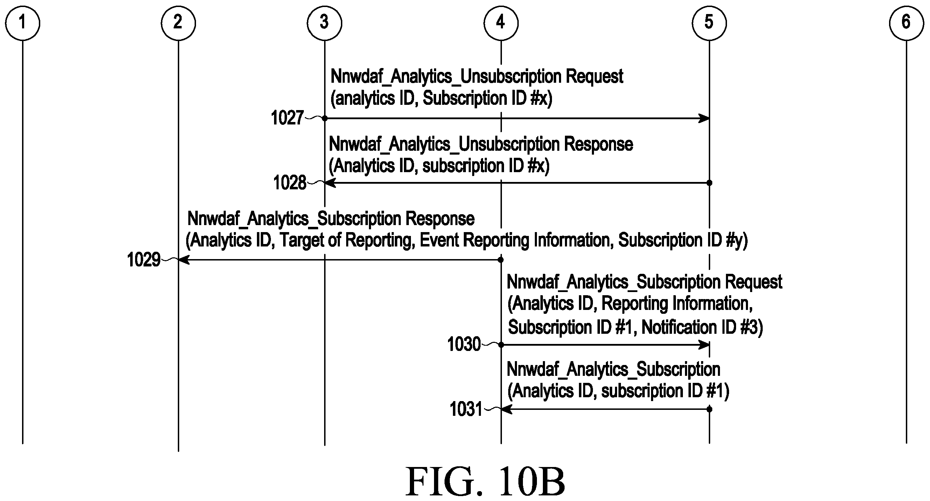

FIGS. 10a and 10b (hereinafter, referred to as FIG. 10) are diagrams illustrating a signal flow for a procedure of updating subscription information to support mobility, when there is a local NWDAF associated with a consumer NF in a wireless communication network according to an embodiment of the disclosure. Various embodiments of the disclosure may include at least one of the following operations.

Referring to FIG. 10, consumer NF #1 1002 subscribes to local NWDAF #1 1006, for data analytics, and local NWDAF #1 1006 subscribes to a source NF 1012, for data collection in operation 0. Consumer NF #1 1002 is associated with local NWDAF #1 1006, and consumer NF #2 1004 is associated with local NWDAF #2 1008.

Operations 1021 to 1026 and operation 1029 may be identical to operations 811 to 816 and operation 819 of FIG. 8.

After a transfer procedure for subscription information is completed in operations 1024 to 1026, local NWDAF #1 1006 may transmit an analytics unsubscription request message Nnwdaf_Analytics_Unscription Request to a central NWDAF 1010 in operation 1027. In an embodiment, the analytics unsubscription request message may include a Subscription ID (e.g., Subscription ID #x) of each subscription to be unsubscribed, together with an Analytics ID. In operation 1028, when local NWDAF #1 1006 receives an analytics unsubscription response message Nnwdaf_Analytics_Unsubscription Response corresponding to the analytics unsubscription request message from the central NWDAF 1010, the unsubscription may be completed in local NWDAF #1 1006.

In a subscription update procedure (e.g., after receiving a Subscription Transfer Response message in operation 1025), new local NWDAF #2 1008 may determine that instead of old local NWDAF #1 1006, the central NWDAF 1110 is to provide at least part of the analytics data (e.g., related to at least one analytics subscription) provided by old local NWDAF #1 1006 to consumer NF #1 1002. In this case, an analytics subscription request message Nnwdaf_Analytics_Subscription Request for a new subscription request may be transmitted from local NWDAF #2 1008 to the central NWDAF 1010 in operation 1030. In an embodiment, the analytics subscription request message may include an Analytics ID related to analytics data that the central NWDAF 1010 wants to provide, Reporting Information (and other subscription information), or a Subscription ID (set to #1 in the illustrated example). In operation 1031, the central NWDAF 1010 may transmit an analytics subscription response message Nnwdaf_Analytics_Subscription Response including the Analytics ID and the Subscription ID (set to #1 in the illustrated example) to local NWDAF #2 1008 in response to the analytics subscription request message.

In the process of changing local NWDAF #1 1006 to local NWDAF #2 1008 in operations 1030 and 1031, the entity providing analytics data may be changed from local NWDAF #1 1006 to local NWDAF #2 1008.

In an embodiment, when data is collected from the source NF 1012 through the central NWDAF 1010, a subscription related to the data collection of the central NWDAF 1010 may not be changed, and thus an update procedure for subscriptions to the source NF 1012 may be skipped.

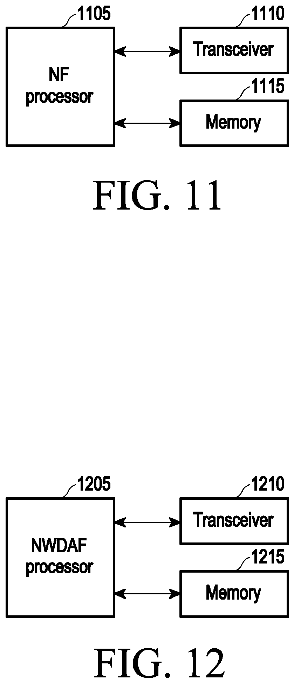

FIG. 11 illustrates the configuration of an NF entity according to an embodiment of the disclosure. The illustrated configuration may be applied to a consumer NF or a source NF according to at least one of the embodiments of the disclosure.

Referring to FIG. 11, the NF entity may include a transceiver 1110, memory 1115, and a processor 1105. The transceiver 1110, the memory 1115, and the processor 1105 of the NF entity may operate according to the above-described NF operations. The configuration of the NF entity is not limited to the illustrated example, and for example, the NF entity may include more or fewer components. The transceiver 1110, the memory 1115, and the processor 1105 may be implemented as at least one chip. In an embodiment, the NF entity may include at least one of a RAN or an entity included in a core network, for example, an AMF, an SMF, or a UPF.

The transceiver 1110 may be configured to transmit and receive signal messages, collected data, and analytics data to and from a UE, another NF entity, or an NWDAF. The memory 1115 may be configured to store programs and data required for the operations of the NF entity. Further, the memory 1115 may be configured to store control information or data included in a signal obtained by the NF entity. The memory 1115 may be configured as a storage medium or a combination of storage media such as ROM, RAM, hard disk, CD-ROM, and DVD. Further, the memory 1115 may include a plurality of memories.

The processor 1115 according to an embodiment of the disclosure may control a series of operations so that the NF entity may operate according to at least one of the above-described embodiments. According to some embodiments, the NF entity may subscribe to an NWDAF to transmit a request for available analytics data and receive a response including the available analytics data from the NWDAF. According to some embodiments, the NF entity may exchange signal messages for supporting mobility and subscription information with another NF entity and the NWDAF entity. The processor 1105 may perform only some operations of the above-described embodiments. The processor 1105 may control all processes so that the NF entity operates according to all or some of the above-described embodiments, not limited to some operations.

FIG. 12 illustrates the configuration of an NWDAF entity according to an embodiment of the disclosure. The illustrated configuration may be applied to a source NWDAF, a target NWDAF, a local NWDAF, or a central NWDAF according to at least one of the embodiments of the disclosure.

Referring to FIG. 12, the NWDAF entity may include a transceiver 1210, memory 1215, and a processor 1205. The transceiver 1210, the memory 1215, and the processor 1205 of the NWDAF entity may operate according to the above-described NWDAF operations. The configuration of the NWDAF entity is not limited to the illustrated example, and for example, the NWDAF entity may include more or fewer components. The transceiver 1210, the memory 1215, and the processor 1205 may be implemented as at least one chip. In an embodiment, the NWDAF entity may include at least one of a RAN or an entity included in a core network, for example, an AMF, an SMF, or a UPF.

The transceiver 1210 may be configured to transmit and receive signal messages, collected data, and analytics data to and from NF entities. The memory 1215 may be configured to store programs and data required for the operations of the NWDAF entity. Further, the memory 1215 may be configured to store control information or data included in a signal obtained by the NWDAF entity. The memory 1215 may be configured as a storage medium or a combination of storage media such as ROM, RAM, hard disk, CD-ROM, and DVD. Further, the memory 1215 may include a plurality of memories.

The processor 1215 according to an embodiment of the disclosure may control a series of operations so that the NWDAF F entity may operate according to at least one of the above-described embodiments. According to some embodiments, the NWDAF entity may receive a subscription request for data analytics from a consumer NF, and transmit a response including the available analytics data to the subscribed consumer NF. According to some embodiments, the NWDAF entity may transmit a subscription request to a source NF and receive collected data from the source NF. According to some embodiments, the NWDAF may exchange signal messages for supporting mobility and subscription information with at least one NF entity and another NWDAF entity. The processor 1205 may perform only some operations of the above-described embodiments. The processor 1205 may control all processes so that the NWDAF entity operates according to all or some of the above-described embodiments, not limited to some operations.

According to various embodiments, a method of supporting mobility by an NWDAF entity in a wireless communication network may include determining to transfer one or more analytics subscriptions for at least one NF, determining a target NWDAF to which the one or more analytics subscriptions are to be transferred, based on at least one of a UE location, the one or more analytics subscriptions, at least one consumer NF, or a target area, transmitting a subscription transfer request message including first subscription information about the one or more analytics subscriptions to the target NWDAF, receiving a subscription transfer response message including second subscription information about at least one analytics subscription generated based on the first subscription information from the target NWDAF, and requesting unsubscription of a corresponding analytics subscription among the at least one analytics subscription from a source NF based on the second subscription information.

According to an embodiment, the second subscription information may include at least one of an Analytics ID, a Target of Reporting, Event Reporting Information, a Notification ID, a Subscription ID, or a Consumer NF ID for an analytics subscription of the consumer NF.

According to an embodiment, the second subscription information may include at least one of an Event ID, Reporting Information, a Notification ID, a Subscription ID, or an NF ID for an analytics subscription of the source NF.

According to an embodiment, the second subscription information may include a Notification ID set to a new value, and a Subscription ID set to the same value in the first subscription information, for each of the at least one analytics subscription.

According to an embodiment, the method may further include requesting subscription update for the corresponding analytics subscription among the at least one analytics subscription from the consumer NF based on the second subscription information.

According to various embodiments, a method of supporting mobility by an NWDAF entity in a wireless communication network may include receiving a subscription transfer request message including first subscription information about one or more analytics subscriptions to at least one NF from a source NWDAF, transmitting a subscription transfer response message including second subscription information about at least one analytics subscription generated based on the first subscription information to the source NWDAF, and transmitting a subscription request message to a source NF related to a corresponding analytics subscription among the at least one analytics subscription based on the second subscription information.

According to an embodiment, the second subscription information may include at least one of an Analytics ID, a Target of Reporting, Event Reporting Information, a Notification ID, a Subscription ID, or a Consumer NF ID for an analytics subscription of a consumer NF.

According to an embodiment, the second subscription information may include at least one of an Event ID, Reporting Information, a Notification ID, a Subscription ID, or an NF ID for an analytics subscription of the source NF.

According to an embodiment, the second subscription information may include a Notification ID set to a new value, and a Subscription ID set to the same value in the first subscription information, for each of the at least one analytics subscription.

According to an embodiment, the subscription request message may include a target NWDAF ID and a Notification ID set to a new value.

According to an embodiment, the subscription request message may further include a Subscription ID set to the same value in the first subscription information.

According to an embodiment, the method may further include transmitting a subscription update request message for the corresponding analytics subscription among the at least one analytics subscription to a consumer NF based on the second subscription information.

According to an embodiment, the subscription update request message may include a New NWDAF ID, and at least one of the first subscription information or a subscription ID obtained from the first subscription information, for the corresponding analytics subscription.

According to various embodiments, an apparatus of an NWDAF entity in a wireless communication network may include a transceiver and a processor operatively coupled to the transceiver. The processor may be configured to determine to transfer one or more analytics subscriptions for at least one NF, determine a target NWDAF to which the one or more analytics subscriptions are to be transferred, based on at least one of a UE location, the one or more analytics subscriptions, at least one consumer NF, or a target area, transmit a subscription transfer request message including first subscription information about the one or more analytics subscriptions to the target NWDAF, receive a subscription transfer response message including second subscription information about at least one analytics subscription generated based on the first subscription information from the target NWDAF, and request unsubscription of a corresponding analytics subscription among the at least one analytics subscription from a source NF based on the second subscription information.

According to various embodiments, an apparatus of an NWDAF entity in a wireless communication network may include a transceiver and a processor operatively coupled to the transceiver. The processor may be configured to receive a subscription transfer request message including first subscription information about one or more analytics subscriptions to at least one NF from a source NWDAF, transmit a subscription transfer response message including second subscription information about at least one analytics subscription generated based on the first subscription information to the source NWDAF, and transmit a subscription request message to a source NF related to a corresponding analytics subscription among the at least one analytics subscription based on the second subscription information.

The embodiments of the disclosure disclosed in the specification and drawings are merely presented as specific examples to easily explain the technical ideas of the disclosure and help the understanding of the disclosure, and are not intended to limit the scope of the disclosure. That is, it is apparent to those skilled in the art that other modifications can be made based on the technical spirit of the disclosure. In addition, the above embodiments may be operated in combination as needed. For example, a base station (BS) and a UE may be operated in a combination of parts of different embodiments of the disclosure.

In the specific embodiments of the disclosure described above, elements included in the disclosure are expressed in singular or plural forms according to the specific embodiments. However, the singular or plural expression is appropriately selected in the context for convenience of description, and the disclosure is not limited to the singular or plural components. Even if a component is expressed as plural, it may be singular. Even a component expressed as singular may be plural in number.

The embodiments of the disclosure disclosed in the specification and drawings are merely presented as specific examples to easily explain the technical ideas of the disclosure and help the understanding of the disclosure, and are not intended to limit the scope of the disclosure. Further, the afore-described embodiments of the disclosure are merely illustrative, and those skilled in the art will understand that various modifications and embodiments of an equivalent scope are possible from the embodiments. Accordingly, the true technical protection scope of the disclosure should be defined by the appended claims.

## Claims

1. A method of supporting mobility by a network data analytics function (NWDAF) entity in a wireless communication network, the method comprising:
determining to transfer one or more analytics subscriptions for at least one network function (NF),
determining a target NWDAF to which the one or more analytics subscriptions are to be transferred, based on at least one of a user equipment (UE) location, the one or more analytics subscriptions, at least one consumer NF, or a target area,
transmitting a subscription transfer request message including first subscription information about the one or more analytics subscriptions to the target NWDAF,
receiving a subscription transfer response message including second subscription information about at least one analytics subscription generated based on the first subscription information from the target NWDAF, and
requesting unsubscription of a corresponding analytics subscription among the at least one analytics subscription from a source NF based on the second subscription information.

2. The method of claim 1, wherein the second subscription information includes at least one of an Analytics ID, a Target of Reporting, Event Reporting Information, a Notification ID, a Subscription ID, or a Consumer NF ID for an analytics subscription of the consumer NF.

3. The method of claim 1, wherein the second subscription information includes at least one of an Event ID, Reporting Information, a Notification ID, a Subscription ID, or an NF ID for an analytics subscription of the source NF.

4. The method of claim 1, wherein the second subscription information includes a Notification ID set to a new value, and a Subscription ID set to the same value in the first subscription information, for each of the at least one analytics subscription.

5. The method of claim 1, further comprising requesting subscription update for the corresponding analytics subscription among the at least one analytics subscription from the consumer NF based on the second subscription information.

6. A method of supporting mobility by a network data analytics function (NWDAF) entity in a wireless communication network, the method comprising:
receiving a subscription transfer request message including first subscription information about one or more analytics subscriptions to at least one network function (NF) from a source NWDAF,
transmitting a subscription transfer response message including second subscription information about at least one analytics subscription generated based on the first subscription information to the source NWDAF, and
transmitting a subscription request message to a source NF related to a corresponding analytics subscription among the at least one analytics subscription based on the second subscription information.

7. The method of claim 6, wherein the second subscription information includes at least one of an Analytics ID, a Target of Reporting, Event Reporting Information, a Notification ID, a Subscription ID, or a Consumer NF ID for an analytics subscription of a consumer NF.

8. The method of claim 6, wherein the second subscription information includes at least one of an Event ID, Reporting Information, a Notification ID, a Subscription ID, or an NF ID for an analytics subscription of the source NF.

9. The method of claim 6, wherein the second subscription information includes a Notification ID set to a new value, and a Subscription ID set to the same value in the first subscription information, for each of the at least one analytics subscription.

10. The method of claim 6, wherein the subscription request message includes a target NWDAF ID and a Notification ID set to a new value.

11. The method of claim 10, wherein the subscription request message further includes a Subscription ID set to the same value in the first subscription information.

12. The method of claim 6, further comprising transmitting a subscription update request message for the corresponding analytics subscription among the at least one analytics subscription to a consumer NF based on the second subscription information.

13. The method of claim 12, wherein the subscription update request message includes a New NWDAF ID, and at least one of the first subscription information or a subscription ID obtained from the first subscription information, for the corresponding analytics subscription.

14. An apparatus of a network data analytics function (NWDAF) entity in a wireless communication network, the apparatus comprising:
a transceiver and a processor operatively coupled to the transceiver,
wherein the processor is configured to:
determine to transfer one or more analytics subscriptions for at least one network function (NF),
determine a target NWDAF to which the one or more analytics subscriptions are to be transferred, based on at least one of a user equipment (UE) location, the one or more analytics subscriptions, at least one consumer NF, or a target area,
transmit a subscription transfer request message including first subscription information about the one or more analytics subscriptions to the target NWDAF,
receive a subscription transfer response message including second subscription information about at least one analytics subscription generated based on the first subscription information from the target NWDAF, and
request unsubscription of a corresponding analytics subscription among the at least one analytics subscription from a source NF based on the second subscription information.

15. An apparatus of a network data analytics function (NWDAF) entity in a wireless communication network, the apparatus comprising:
a transceiver and a processor operatively coupled to the transceiver,
wherein the processor is configured to:
receive a subscription transfer request message including first subscription information about one or more analytics subscriptions to at least one network function (NF) from a source NWDAF,
transmit a subscription transfer response message including second subscription information about at least one analytics subscription generated based on the first subscription information to the source NWDAF, and
transmit a subscription request message to a source NF related to a corresponding analytics subscription among the at least one analytics subscription based on the second subscription information.
